# EUROPEAN PATENT APPLICATION

(11) **EP 4 645 281 A1**
(43) Date of publication of application: **05.11.2025**
(21) Application number: 24305666.0
(22) Date of filing: 29.04.2024
(51) Int. Cl.: G08G 5/00

(54) **AIRCRAFT ENERGY MANAGEMENT**

(71) Applicant: Rockwell Collins, Inc., Cedar Rapids, IA 52498 (US)
(72) Inventor: BITAR, Elias, Tournefeuille, 31170 (FR); AUDOUNET, Laurent, Carbonne, 31390 (FR)
(74) Representative: Dehns

(57) **Abstract**

A method of determining a multi-energy flight plan for an aircraft travelling from a first location to a second location. The aircraft comprises a plurality of energy sources, and a processing portion. The method includes determining a trajectory of the aircraft from the first location to the second location (101); dividing the trajectory into a plurality of portions; inputting a constraint on the energy source used during at least one portion (102); and determining a multi-energy flight plan including the energy sources to be used during each portion (108).

## Description

### FIELD OF TECHNOLOGY

The examples described herein relate to a system for and method of managing energy sources on a hybrid aircraft.

### BACKGROUND

The flight management system of an aircraft is used to generate a flight plan for a journey of the aircraft, including the trajectory and altitude of the aircraft, the time to reach the destination, and the fuel required. The flight plan may optimise the fuel usage and time taken to reach to the destination.

Hybrid aircraft are a type of aircraft that use more than one energy source, compared to traditional aircraft which only use a single fuel source such as kerosene. Therefore, the flight management system should also account for the different energy sources available when generating the flight plan. However, there may be a need to impose certain restrictions on the energy sources used at different stages of the flight.

There is a need for an improved method for determining a flight plan for an aircraft including different energy sources.

### SUMMARY

According to this disclosure, there is provided a method of determining a multi-energy flight plan for an aircraft travelling from a first location to a second location, wherein the aircraft comprises a plurality of energy sources and a processing portion; the method comprising: determining a trajectory of the aircraft from the first location to the second location; dividing the trajectory into a plurality of portions; inputting a constraint on the energy source used during at least one portion (of the plurality of portions of the trajectory); and determining a multi-energy flight plan including the energy sources to be used during each portion (of the plurality of portions of the trajectory).

Also according to this disclosure, there is provided a system for determining a multi-energy flight plan for an aircraft travelling from a first location to a second location, wherein the system comprises a processing portion configured to: determine a trajectory of the aircraft from the first location to the second location; divide the trajectory into a plurality of portions; and determine a multi-energy flight plan including the energy sources used during each portion (of the plurality of portions of the trajectory), based on a constraint on the energy source used during at least one portion (of the plurality of portions of the trajectory).

The processing portion may be implemented in any suitable and desired way. For example, the processing portion may be a single processing module within the system arranged to determine the multi-energy flight plan. In some examples, the processing portion comprises a plurality of modules, wherein each of the plurality of modules are arranged to communicate with one another to determine the multi-energy flight plan. The plurality of modules making up the processing portion may be located in the same region, e.g. in the same device. The plurality of modules making up the processing portion may be located "off-chip" with respect to one another.

In some examples, the processing portion comprises a flight management system. The processing portion (e.g. the flight management system) determines a flight plan for an aircraft, it typically considers the entire journey of the aircraft from a first location, e.g. from a first gate of an airport, to a second location, e.g. to a second gate of another airport. The processing portion (e.g. the flight management system) determines a trajectory of the aircraft between the first and second locations, with the trajectory being divided into portions based on the different stages of flight. This includes different stages of the aircraft's journey, such as taxiing of the aircraft from the gate to the runway (and vice versa), take-off, climbing, cruising, descent and landing of the aircraft. Each stage of the trajectory may be sub-divided into portions, e.g. the cruising stage may be sub-divided into portions based on the airspaces crossed and/or the altitude of the aircraft.

At the different portions of the trajectory, the aircraft may use different energy sources, e.g. in order to maximise the efficiency of the aircraft. For example, it may be more fuel-efficient for the aircraft to use aviation fuel at earlier stages in the flight, e.g. during take-off, to reduce the weight of the aircraft; however, battery power may be more efficient when cruising. In general, an aircraft may use a single energy source per portion of the trajectory.

In some examples, the processing portion comprises an energy management system, wherein the energy management system is configured to determine which energy source should be used at each portion of the trajectory based on the constraint(s), and communicate this to the flight management system such that a multi-energy flight plan can be determined.

Constraint(s) on the type of energy source the aircraft is able to use at a particular portion of the trajectory are entered into the processing portion , e.g. "battery power only during taxi". Such constraint(s) may limit the energy source(s) that are available to the aircraft at other portions of the trajectory, and thus the flight management system may adjust the flight plan such that the aircraft uses different energy source(s) at other portion(s) of its trajectory.

In some examples, the processing portion comprises a processor configured to receive the constraint(s). The processor may communicate these constraint(s) to the processing portion (e.g. to the flight management system and/or energy management system) in order to determine which energy source(s) can be used for a (e.g. each) portion of the trajectory.

The constraint may be entered into the processing portion manually by the pilot, e.g. before beginning the flight. The constraint(s) may also be associated with a given destination, e.g. such that the constraint(s) may be entered into the processing portion at the same time as the destination is entered. This may be useful when a particular airport, or region, has particular constraint(s) on the energy source(s) that can be used. The constraint(s) may be associated with the trajectory of the aircraft passing through a particular airspace. Thus, the constraint(s) may be entered automatically into the processing portion when the trajectory of the aircraft is determined.

The constraint(s) may be retrieved from (and thus, in examples, stored on) any suitable and desired storage location, e.g. a memory. In some examples, the constraint(s) are stored in a memory of the processing portion. Thus, in examples, the processing portion comprises a memory. In some examples, the constraint(s) are stored in a memory on the aircraft, e.g. in a different system to the flight management system.

The constraint(s) may be loaded onto the memory (e.g. on the aircraft or system) prior to a flight, such that they are able to be retrieved, when required during a flight, by the processing portion. In some examples, constraint(s) may be requested and transferred to the system at the point-of-use (e.g. when the trajectory is determined to pass through a particular airspace or destination). This may be transferred from another on-board system to the system that determines the flight plan, or from a ground-based system.

Once the constraint(s) have been determined, the processing portion is then able to determine a multi-energy flight plan for the aircraft from the first location to the second location, including the trajectory of the aircraft (e.g. including the latitude, longitude, and altitude of the aircraft) and the energy source to be used during each portion of the trajectory, accounting for the constraint(s) on the energy source(s). Thus, for example, the constraint(s) may determine the energy source(s) to be used for one (or more) of the portions of the trajectory.

The step of determining the multi-energy flight plan comprises determining the energy source(s) to be used for the other portion(s) of the trajectory, e.g. for the portion(s) of the flight which do not have an energy source which has been pre-determined by the constraint(s).

This may allow for a multi-energy flight plan to be generated which complies with all of the restrictions that may be imposed on the energy sources of an aircraft during flight. The multi-energy flight plan may further allow for the aircraft to switch between different energy sources automatically during the course of the flight (e.g. as the aircraft moves from one portion of its trajectory to the next), e.g. without requiring input from the crew.

In some examples, the plurality of energy sources includes one or more (e.g. all) of: a battery, jet fuel, gasoline, biofuel, hydrogen, and solar energy. The skilled person will appreciate that any suitable energy source may be used for powering the aircraft, and the multi-energy flight plan may be adapted to consider any number of energy sources. This may allow for the multi-energy flight plan to be adapted to many different aircraft with different available energy sources.

In some examples, the constraint(s) on the energy source(s) comprise one or more constraints (e.g. limitations) on the (e.g. carbon) emissions produced by the aircraft at a particular portion (e.g. one or more of the plurality of portions) of the trajectory. For example, the constraint entered may be "only zero carbon emissions sources during cruising". The processing portion (e.g. a processor and, e.g., memory associated with the processing portion) may interpret this as only using battery power or hydrogen fuel during this portion.

The constraint(s) may comprise one or more constraints (e.g. limitations) on the noise emitted by the aircraft during a particular portion (e.g. one or more of the plurality of portions), e.g. "only use energy sources that produce aircraft noise of below a given decibel threshold". The processing portion (e.g. a processor and memory associated with the processing portion) may interpret this as only using battery power for take-off and/or landing during unsociable hours.

These constraint(s) may be entered manually, or may be entered automatically into the processing portion, e.g. from a memory when the trajectory is determined, e.g. if it is determined that the aircraft will land within a particular time window.

Certain countries may have restrictions on the fuel types that are allowed to be used in their airspaces, and this may also be entered into the processing portion as a constraint, either manually, or automatically, e.g. from a memory when the trajectory is determined to cross these airspaces.

In some examples, the processing portion (e.g. the energy management system) receives a measurement of the available fuel in (e.g. each of) the energy sources (e.g. via the processor), and determines an energy budget for the flight plan using the available fuel. The energy budget may account for (e.g. each portion of) the trajectory of the aircraft, and thus determines how much of each energy source is available to the aircraft for (e.g. each portion of) the trajectory. The energy budget may also account for the constraint(s) on (e.g. each of) the energy sources, e.g. the energy budget may determine how much of (e.g. each of) the energy sources remains after the constraint(s) on the energy sources are applied.

For example, where a constraint requires battery power to be used during take-off and landing, the energy budget may determine that there is only aviation fuel available for the other portions of the flight. The energy budget may allow for the processing portion to determine a multi-energy flight plan that does not expend more of a particular energy source than is possible.

In some examples, the energy budget comprises an emergency fuel reserve. The emergency fuel reserve may be a minimum level of fuel in one or more (e.g. each) of the energy sources to be remaining after the flight plan is determined. This may help to accommodate any changes to the flight path of the aircraft mid-flight, for example a diversion to a different airport owing to poor weather.

In some examples, the method comprises determining (e.g. optimising) the multi-energy flight plan to reduce the overall fuel (the fuel used during the trajectory) used from one or more (e.g. each) of the energy sources. For example, the multi-energy flight plan may be generated to have the largest energy budget remaining at the end of the flight. This may be useful for reducing fuel costs, as well as allowing more fuel to remain in case of emergencies.

In some examples, the method comprises determining a multi-energy flight plan for the aircraft to a third location. This may be useful for an aircraft which makes one or more stops, e.g. for refuelling. The energy budget may include information relating to the availability of refuelling a particular energy source at an intermediate location and, e.g., the time taken to sufficiently refuel.

For example, whilst an aircraft may be at an intermediate location with both aviation fuel supplies and battery chargers, the time the aircraft is at the intermediate location may be insufficient to charge the aircraft battery (e.g. above a particular threshold). For example, the energy budget may not include recharging the battery at the intermediate location, but may include refuelling the aircraft with aviation fuel. In another example, the energy budget may include swapping out the battery at the intermediate location, and may not include refuelling the aircraft with aviation fuel, e.g. in an instance where swapping out the battery is faster than refuelling.

In some examples, the method comprises determining a second multi-energy flight plan when the aircraft is diverted, i.e. from the aircraft's present location to a third (diverted) location. This may comprise: determining a revised trajectory of the aircraft from the present location to the third location; dividing the revised trajectory into a plurality of portions; inputting a constraint on the energy source used during at least one portion(of the plurality of portions of the revised trajectory); and determining a multi-energy flight plan including the energy sources to be used during each portion (of the plurality of portions of the revised trajectory). In this example, the constraint on the energy source used may be that the emergency fuel reserve of one or more (e.g. each) of the plurality of energy sources may be used.

In some examples, the method comprises indicating that a multi-energy flight plan cannot be generated with the energy budget and the constraint(s). The flight management system may issue an indication (e.g. via a screen visible to the pilot) that there is insufficient fuel in a particular energy source (of the plurality of energy sources) to generate a flight plan with the current constraint(s). This may allow for the crew to refuel the aircraft, or to signal to air traffic control that one or more constraints will not be able to be fulfilled, e.g. in order for a new flight plan to be generated (e.g. and approved by air traffic control). In some examples, the method comprises changing the trajectory of the aircraft satisfy the energy budget. This may ensure that there is enough fuel in (e.g. each of) the energy sources to satisfy the constraint(s) on the flight plan.

In some examples, the different energy sources are weighted differently by the processing portion (e.g. the energy management portion)when determining which fuel source to use for (e.g. the different portions of the trajectory of) the flight plan. For example, the weightings may be based on factors such as the cost of the fuel, the carbon-emissions efficiency of the fuel, and the time taken to reach the destination. The weightings may be used to determine a preferred energy source (e.g. automatically) for each portion of the trajectory.

In some examples, the method comprises determining a cost index for the multi-energy flight plan, e.g. by using the weightings of the energy sources. This may enable the preferred energy source used for each portion of the trajectory to balance both time efficiency and cost.

In some examples, the method comprises (e.g. manually) inputting a preferred energy source to be used during at least one portion of the trajectory, e.g. an energy source per portion of the trajectory. The preferred energy source(s) may be used to determine the flight plan after the constraint(s) are considered.

In some examples, the method comprises determining (e.g. optimising) the flight plan based on the weight of the aircraft. For example, it may be more efficient to use fuel(s) that cause the aircraft to become lighter as they are used, such as aviation fuel and/or hydrogen fuel, earlier on in the flight. This may allow for other energy source(s), such as battery power, to be used later on in the flight when the aircraft is lighter, for a more efficient usage of the remaining energy source(s). This may be included in the flight plan, e.g. when determining the energy budget.

In some examples, the method comprises inputting a plurality of constraints on the energy source(s) used during at least one portion (e.g. a plurality of portions) of the plurality of portions of the trajectory. Thus, the method may comprise determining a multi-energy flight plan including the energy sources to be used during each portion (of the plurality of portions of the trajectory), accounting for the plurality of constraints on the energy sources.

Features of any example described herein may, wherever appropriate, be applied to any other example described herein. Where reference is made to different examples, it should be understood that these are not necessarily distinct but may overlap.

### BRIEF DESCRIPTION OF THE DRAWINGS

One or more non-limiting examples will now be described, by way of example only, and with reference to the accompanying drawings, in which:
Figure 1 shows a flow chart of the process for determining a flight plan;
Figure 2 shows schematically a system for determining a flight plan.

### DETAILED DESCRIPTION

The examples described herein may be used for determining a flight plan for an aircraft including different energy sources. Other flight planning applications, however, are also envisaged and the examples are not limited to this.

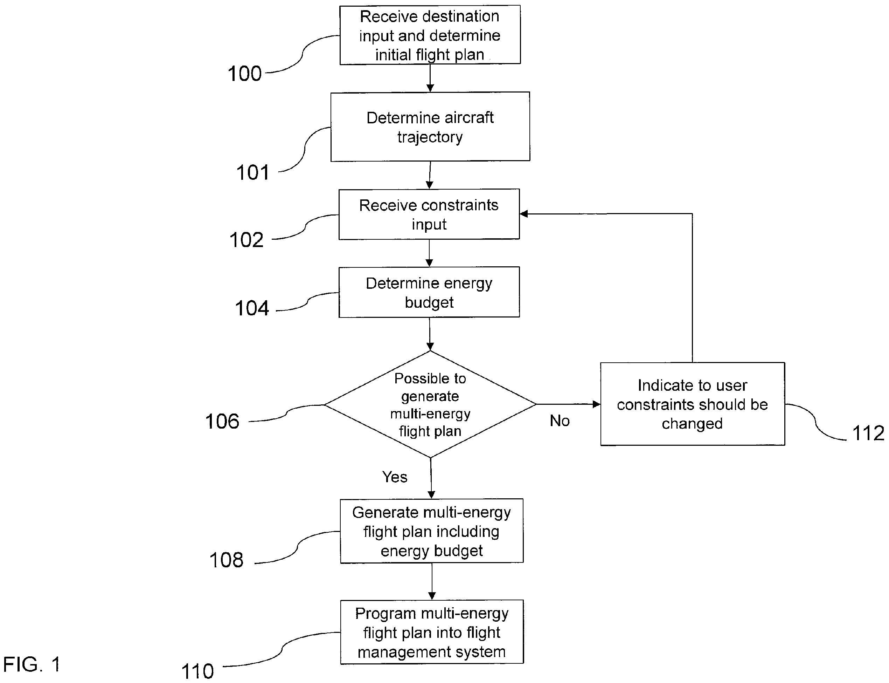

Figure 1 shows a flow chart of the process of generating a multi-energy flight plan for an aircraft including more than one energy source, taking into account one or more constraints. This process involves a sequence of steps which take place within a system of the aircraft. The system for generating the multi-energy flight plan for an aircraft may include, be part of, or be separate from the flight management system of the aircraft. The energy sources include two or more (e.g. all) of: a battery, jet fuel, gasoline, biofuel, hydrogen, and solar energy.

At step 100, the (e.g. flight management) system receives an input of the destination, e.g. a destination airport. This allows for the flight management system to define an initial flight plan, for example including the approximate distance between the current position of the aircraft and the destination. At step 101, the flight management system determines a (e.g. initial) trajectory of the aircraft to the destination. This trajectory may then be divided into portions by the flight management system. For example, the portions may include one, more or all of: taxi to take off, take off, climbing, cruising over various airspaces, descent, landing, taxi to destination.

At step 102, the (e.g. flight and/or energy management) system receives the constraints on the energy sources that may be used for each portion of the trajectory. The constraints may be programmed in manually, for example by the pilot inputting that battery power is required to be used during take off. The constraints may also be retrieved automatically from a memory, e.g. where the constraints are associated with a particular location, or an airspace the trajectory passes over.

At step 104, the (e.g. energy management) system determines the energy budget for the flight. This accounts for the available energy in each energy source, e.g. by receiving measurements from each fuel source. The energy budget also includes the constraints for each portion of the trajectory.

At step 106, the (e.g. flight and/or energy management) system determines whether it is possible to generate a multi-energy flight plan using the energy budget. The energy budget is used to determine how much energy is available for each portion of the trajectory, and the (e.g. flight and/or energy management system) determines how much energy is required for each portion of the trajectory.

If the (e.g. flight and/or energy management) system determines, at step 106, that it is not possible to generate a multi-energy flight plan with the available energy and constraints, at step 112, the flight management system indicates that the constraints and/or trajectory of the aircraft should be changed. For example, this indication may be via a screen visible to the pilot. In such an instance, the pilot may opt to adjust one or more of the constraints, refuel the aircraft, and/or indicate to air traffic control that the flight is not possible with the constraints. Furthermore, one or more of the (or one or more different) constraints may be re-input to the flight management system at step 102.

If, at step 106, the (e.g. flight and/or energy management) system determines that it is possible to generate a multi-energy flight plan with the energy budget and the constraints, at step 108, the (e.g. flight and/or energy management) system determines a multi-energy flight plan using the energy budget, using the plurality of energy sources available and accounting for the constraints. The flight plan includes determining which energy source will be used for each portion of the trajectory. In addition to any constraints on the energy source(s) used for each portion, the (e.g. flight and/or energy management) system may also seek to optimise the energy sources used on the remaining portions, e.g. by using a cost index to optimise the multi-energy flight plan and/or reducing the overall emissions produced by the flight.

At step 110, the generated flight plan is programmed into the flight management system, and the flight can proceed, based on the programmed multi-energy flight plan.

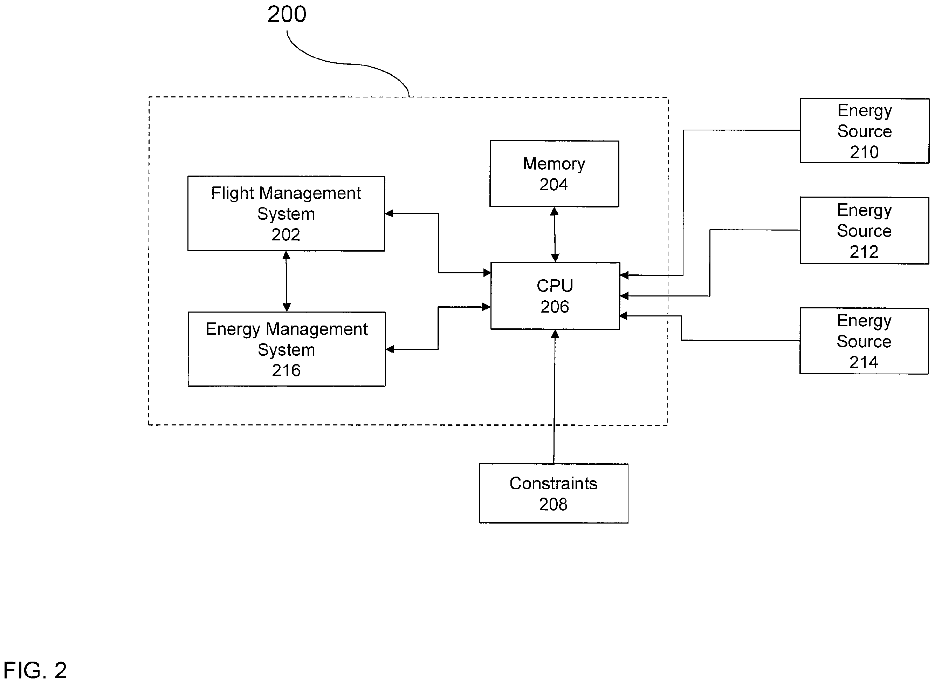

Figure 2 shows schematically a system 200, which performs the steps described with reference to Figure 1.

The system 200 includes a flight management system 202 and an energy management system 216 in communication with one another, and which are both connected to a CPU 206. The CPU 206 is connected to a memory 204. The CPU 206 is configured (e.g. by executing appropriate software) to retrieve any constraints associated with the trajectory of the aircraft from the memory 204.

The CPU 206 receives measurements of the remaining fuel from the first, second and third energy sources 210, 212, 214, and receives externally input constraints 208 on the energy sources to be used during the flight. The CPU 206 processes the measurements of the remaining fuel from the energy sources 210, 212, 214, the constraints 208 and the constraints retrieved from the memory, and inputs the information to the energy management system 216. The energy management 216 is configured to determine an energy budget for the flight.

The flight management system 202 is configured to determine a multi-energy flight plan based on the energy budget determined by the energy management system 216. . The determination of the multi-energy flight plan by the flight management system 202 includes computation of the trajectory of the aircraft, and the energy sources to be used for each portion of the trajectory.

## Claims

1. A method of determining a multi-energy flight plan for an aircraft travelling from a first location to a second location, wherein the aircraft comprises a plurality of energy sources and a processing portion;
the method comprising:
determining a trajectory of the aircraft from the first location to the second location;
dividing the trajectory into a plurality of portions;
inputting a constraint on the energy source used during at least one portion; and
determining a multi-energy flight plan including the energy sources to be used during each portion.

2. The method as claimed in claim 1, wherein the processing portion comprises a flight management system, optionally wherein the processing portion comprises an energy management system.

3. The method as claimed in any preceding claim, comprising receiving a measurement of the available energy in each of the energy sources; and
determining an energy budget for the multi-energy flight plan using the available energy.

4. The method as claimed in claim 3, wherein the energy budget comprises an emergency energy reserve.

5. The method as claimed in claim 3 or 4, comprising indicating that a multi-energy flight plan cannot be generated with the energy budget and the constraint.

6. The method as claimed in claim 3, 4 or 5, comprising changing the trajectory of the aircraft to satisfy the energy budget.

7. The method as claimed in any one of the preceding claims, comprising determining the multi-energy flight plan to reduce the overall energy used from each energy source.

8. The method as claimed in any one of the preceding claims, comprising determining a multi-energy flight plan for the aircraft to a third location.

9. The method as claimed in any one of the preceding claims, comprising determining a second multi-energy flight plan when the aircraft is diverted.

10. The method as claimed in any one of the preceding claims, wherein the different energy sources are weighted differently for different portions of the trajectory.

11. The method as claimed in any one of the preceding claims, comprising using a cost index to optimise the multi-energy flight plan.

12. The method as claimed in any one of the preceding claims, wherein the constraint on the energy source comprises one or more constraints on the emissions produced by the aircraft at a particular portion of the trajectory.

13. The method as claimed in in any one of the preceding claims, wherein the constraint on the energy source comprises one or more constraints on the noise produced by the aircraft produced by the aircraft.

14. The method as claimed in any one of the preceding claims, wherein the plurality of energy sources include one or more of a battery, jet fuel, gasoline, biofuel, hydrogen, and solar energy.

15. A system for determining a multi-energy flight plan for an aircraft travelling from a first location to a second location, wherein the system comprises a processing portion configured to:
determine a trajectory of the aircraft from the first location to the second location;
divide the trajectory into a plurality of portions; and
determine a multi-energy flight plan including the energy sources used during each portion, based on a constraint on the energy source used during at least one portion.
